# EUROPÄISCHE PATENTANMELDUNG

(11) **EP 4 749 207 A1**
(43) Veröffentlichungstag der Anmeldung: **27.05.2026**
(21) Anmeldenummer: 25216786.1
(22) Anmeldetag: 18.11.2025
(51) Int. Cl.: F25B 6/04, F25B 9/00, F25B 41/20, F25B 49/02

(54) **VERBESSERTE WÄRMEPUMPE FÜR EIN FAHRZEUG UND VERFAHREN DAFÜR**

(30) Priorität: 22.11.2024 DE 102024134540
(71) Anmelder: Konvekta Aktiengesellschaft, 34613 Schwalmstadt (DE)
(72) Erfinder: Fink, Sebastian, 34613 Schwalmstadt (DE)
(74) Vertreter: Lindinger, Bernhard

(57) **Zusammenfassung**

Die Erfindung betrifft Wärmepumpe (1) für ein Fahrzeug umfassend einen Kältemittelkreislauf (3) mit wenigstens einem Verdichter (5), einem als Gaskühler/Kondensator betreibbaren als Kältemittel-Flüssigkeits-Wärmetauscher ausgebildeten ersten Wärmetauscher (7), einem als Gaskühler/Kondensator zum Heizen betreibbaren zweiten Wärmetauscher (9), wenigstens einem Expansionsorgan (11, 47) und einem als Verdampfer betreibbaren dritten Wärmetauscher (13), wobei im Wärmepumpenbetrieb der erste Wärmetauscher (7) in Kältemittelströmungsrichtung stromaufwärts des zweiten Wärmetauschers (9) angeordnet ist, und der Kältemittelkreislauf (3) einen den Gaskühler-/Kondensatorbereich (21) des zweiten Wärmetauschers (9) umgehenden schließbaren Bypass (19) umfasst, und der Kältemittelkreislauf (3) derart ausgebildet ist, dass der Bypass (19) soweit öffenbar ist, dass mit geöffnetem Bypass (19) im Wärmepumpenbetrieb der erste Wärmetauscher (7) ohne den zweiten Wärmetauscher (9) betreibbar ist, und die Wärmepumpe (1) Mittel (29) zum Einstellen der Kältemittelfüllmenge des im Wärmepumpenbetrieb mit Kältemittel durchströmten Bereichs des Kältemittelkreislaufs (3) umfasst. Ferner betrifft die Erfindung ein Fahrzeug mit der Wärmepumpe (1) und ein Verfahren zum Betreiben dieser.

## Beschreibung

### Gebiet der Technik:

Die Erfindung betrifft eine Wärmepumpe gemäß dem Oberbegriff des Anspruchs 1. Eine derartige Wärmepumpe wird in einem Fahrzeug insbesondere zum Heizen eingesetzt. Sie umfasst einen Kältemittelkreislauf mit wenigstens einem Verdichter, einem als Gaskühler/Kondensator betreibbaren als Kältemittel-Flüssigkeits-Wärmetauscher ausgebildeten ersten Wärmetauscher, einem als Gaskühler/Kondensator zum Heizen betreibbaren zweiten Wärmetauscher, wenigstens einem Expansionsorgan und einem als Verdampfer betreibbaren dritten Wärmetauscher. Dem bei Wärmepumpenbetrieb im Verdichter komprimierten warmen Kältemittel wird in wenigstens einem der als Gaskühler/Kondensator betreibbaren Wärmetauschern Wärme entzogen und dann im Expansionsorgan entspannt, wobei es sich abkühlt um darauf, bevor es zum Verdichtereinlass gelangt, in zumindest einem als Verdampfer betriebenen Wärmetauscher Wärme aufzunehmen.

Ferner betrifft die Erfindung ein Fahrzeug mit einer derartigen Wärmepumpe sowie ein Verfahren zum Betreiben der Wärmepumpe in einem Fahrzeug.

### Stand der Technik:

Bekannt sind Wärmepumpen für Fahrzeuge, bei denen sowohl eine Flüssigkeit wie beispielsweise Wasser erwärmt werden kann und zusätzlich Luft für oder in einem Fahrzeuginnenraum heizbar ist. DE 11 2009 001 136 B4 offenbart eine derartige Wärmepumpe für ein Fahrzeug, bei der im Kältemittelkreislauf ein Kältemittel-Flüssigkeits-Wärmetauscher im Wärmepumpenbetrieb stromaufwärts eines zum Heizen betriebenen Innenwärmetauschers angeordnet ist und ein Außenwärmetauscher als Verdampfer betrieben wird. Der Hochdruck wird dabei über das Expansionsorgan geregelt, was bei zu erzielender Leistung der Wärmepumpe nicht immer optimal ist. Im Wärmepumpenbetrieb der in DE 11 2009 001 136 B4 offenbarten Wärmepumpe, wie auch bei einer der in DE 10 2022 108 475 A1 und bei einer der in DE 10 2016 110 443 A1 offenbarten Wärmepumpen, sind nachteilig immer der Kältemittel-Flüssigkeits-Wärmetauscher und der Innenwärmetauscher von Kältemittel durchströmt, was nicht immer effizient ist.

Diesen Nachteil haben zwar die in DE 10 2010 051 976A1 und in CN 114571955 A offenbarten Wärmepumpen nicht, doch dort ist keine Regelung des Hochdrucks zur Optimierung der Leistung für den jeweiligen Betriebsmodus im Kältemittelkreislauf beschrieben, was sich zu Lasten der Effizienz der Wärmepumpe auswirkt und damit auch ein flexibles effizienzoptimiertes Betreiben der Wärmepumpe nicht ausreichend gewährleistet.

Der im Anspruch 1 angegebenen Erfindung liegt also das Problem zugrunde, dass bisherige Wärmepumpen für Fahrzeuge hinsichtlich Flexibilität und dabei hoher Effizienz unzureichend sind.

Es ist daher Aufgabe, eine verbesserte Wärmepumpe für ein Fahrzeug umfassend einen Kältemittelkreislauf mit einem als Gaskühler/Kondensator betreibbaren als Kältemittel-Flüssigkeits-Wärmetauscher ausgebildeten ersten Wärmetauscher und einem als Gaskühler/Kondensator zum Heizen betreibbaren zweiten Wärmetauscher bereitzustellen.

Eine entsprechende Aufgabe besteht für ein Fahrzeug mit einer derartigen Wärmepumpe.

Ferner ist es eine weitere Aufgabe, ein verbessertes Verfahren zum Betreiben einer Wärmepumpe in einem Fahrzeug bereitzustellen.

### Zusammenfassung der Erfindung:

Das der im Anspruch 1 angegebenen Erfindung zugrundeliegende Problem wird durch die im Anspruch 1 aufgeführten Merkmale gelöst. Dadurch, dass die Wärmepumpe für ein Fahrzeug einen Kältemittelkreislauf mit wenigstens einem Verdichter, einem als Gaskühler/Kondensator betreibbaren als Kältemittel-Flüssigkeits-Wärmetauscher ausgebildeten ersten Wärmetauscher, einem als Gaskühler/Kondensator zum Heizen betreibbaren zweiten Wärmetauscher, wenigstens einem Expansionsorgan und einem als Verdampfer betreibbaren dritten Wärmetauscher umfasst, wobei in demjenigen Wärmepumpenbetrieb, bei dem der erste und zweite Wärmetauscher mit Kältemittel durchströmt werden, der erste Wärmetauscher in Kältemittelströmungsrichtung stromaufwärts des zweiten Wärmetauschers angeordnet ist, und wobei der Kältemittelkreislauf einen den Gaskühler-/Kondensatorbereich des zweiten Wärmetauschers umgehenden schließbaren Bypass umfasst, sowie der Kältemittelkreislauf derart ausgebildet ist, dass der Bypass soweit öffenbar ist, dass mit geöffnetem Bypass im Wärmepumpenbetrieb der erste Wärmetauscher ohne den zweiten Wärmetauscher betreibbar ist, und die Wärmepumpe zwei Ventile umfassende Mittel zum Einstellen der Kältemittelfüllmenge des im Wärmepumpenbetrieb mit Kältemittel durchströmten Bereichs des Kältemittelkreislaufs umfasst, wird das Problem gelöst.

Ein Wärmepumpenbetrieb der erfindungsgemäßen Wärmepumpe ist, ohne dass dabei Luft für oder in einem Fahrzeuginnenraum gekühlt wird, der Betrieb der Wärmepumpe, bei dem ein Medium wie beispielsweise Luft für und/oder in einem Fahrzeuginnenraum direkt oder indirekt durch Wärmetausch im zweiten Wärmetauscher geheizt wird und/oder Flüssigkeit im ersten Wärmetauscher erwärmt wird.

Ein als Gaskühler/Kondensator betreibbarer Wärmetauscher kann als ein Kondensator für im Hochdruckbereich des Kältemittelkreislaufs unterkritisch zu betreibendes Kältemittel betreibbar ausgebildet oder als ein Gaskühler für im Hochdruckbereich des Kältemittelkreislaufs überkritisch zu betreibendes Kältemittel betreibbar ausgebildet sein oder er kann derart ausgebildet sein, dass er sowohl als Gaskühler als auch als Kondensator einsetzbar ist.

Ein Gaskühler-/Kondensatorbereich ist der Bereich eines Wärmetauschers, der bei dessen Betrieb als Gaskühler/Kondensator mit Kältemittel zum Wärmetausch durchströmt wird.

Diese Wärmepumpe hat den Vorteil, dass sie im Wärmepumpenbetrieb derart flexibel betrieben werden kann, dass in dem einen Betriebsmodus bei geschlossenem Bypass der erste und der zweite Wärmetauscher als Gaskühler/Kondensator laufen und dabei das strömende Kältemittel sowohl eine Flüssigkeit im ersten Wärmetauscher als auch ein Mediums im zweiten Wärmetauscher erwärmt, und in dem anderen Betriebsmodus mit ausreichend geöffnetem Bypass nur der erste und nicht der zweite Wärmetauscher als Gaskühler/Kondensator läuft und dabei das strömende Kältemittel nur die Flüssigkeit im ersten Wärmetauscher erwärmt. Mit beispielsweise einem Ventil ließe sich der Bypass öffnen und schließen. Für den jeweiligen der beiden Betriebsmodi ist vorteilhaft die Kältemittelfüllmenge des im Wärmepumpenbetrieb mit Kältemittel durchströmten Bereichs des Kältemittelkreislaufs einstellbar, sodass damit der Hochdruck im Hochdruckbereich des Kältemittelkreislaufs auf einen effizienten Betrieb der Wärmepumpe im jeweiligen Betriebsmodus anpassbar ist. Mit der Anpassung des Hochdrucks auf den jeweiligen Betriebsmodus durch Einstellung der Kältemittelfüllmenge ist die Effizienz der Wärmepumpe erhöht. Die Kombination aus Flexibilität durch zwei Betriebsmodi und Einstellung der Kältemittelfüllmenge im Wärmepumpenbetrieb begünstigt in beiden Betriebsmodi eine ausreichende Erwärmung von Flüssigkeit im ersten Wärmetauscher.

In den Unteransprüchen sind vorteilhafte Ausgestaltungen, Weiterbildungen und Verbesserungen des jeweiligen Gegenstandes der Erfindung angegeben.

Gemäß einer vorteilhaften Ausführung ist der erste Wärmetauscher flüssigkeitsseitig mit Wasser oder einem Wasser-Glykol-Gemisch durchströmbar ausgebildet und angeordnet, und/oder der zweite Wärmetauscher ist als Innenwärmetauscher ausgebildet und angeordnet zum direkten oder indirekten Heizen von Luft für einen und/oder in einem Fahrzeuginnenraum betreibbar, und der dritte Wärmetauscher ist als Außenwärmetauscher ausgebildet und angeordnet zur Wärmeaufnahme des Kältemittels direkt oder indirekt von danach nach außen strömender Luft betreibbar. Dadurch lässt sich mit der Wärmepumpe Wasser oder ein Wasser-Glykol-Gemisch eines Flüssigkeitskreislaufs unabhängig vom Betrieb des als Innenwärmetauscher ausgebildeten zweiten Wärmetauschers erwärmen.

Beim direkten Heizen oder Kühlen von Luft findet der Wärmetausch von Kältemittel zu Luft im Wärmetauscher statt. Hingegen erfolgt beim indirekten Heizen oder Kühlen von Luft der Wärmetausch mit dem Kältemittel mittels eines zwischengeschalteten Kreislaufs eines Mediums zum Wärmetransport, wobei im vom Kältemittel durchströmten Wärmetauscher ein Wärmetausch mit diesem Wärmetransportmedium stattfindet.

Von Vorteil ist eine Ausführung, bei der ein Ventil zum Öffnen/Schließen des im Kältemittelkreislauf den Gaskühler-/Kondensatorbereich des zweiten Wärmetauschers umgehenden Bypasses als ein Magnetventil ausgebildet ist. Mit einem Magnetventil lässt sich der Durchlass von Kältemittel gut schalten.

Vorzugsweise ist das Ventil zum Öffnen/Schließen des im Kältemittelkreislauf den Gaskühler-/Kondensatorbereich des zweiten Wärmetauschers umgehenden Bypasses als ein für den Durchlass stufenlos regelbares Ventil ausgebildet. Damit ist die Größe des Volumenstrom von Kältemittel durch den Gaskühler-/Kondensatorbereich des zweiten Wärmetauschers gut einstellbar und somit auch seine Wärmeleistung. Dieses ist ein Zugewinn an Flexibilität für den Wärmepumpenbetrieb.

Nach einer vorteilhaften Ausführung umfassen die Mittel zum Einstellen der Kältemittelfüllmenge des im Wärmepumpenbetrieb mit Kältemittel durchströmten Bereichs des Kältemittelkreislaufs einen Kältemittelsammelbehälter und zum Einstellen dessen Kältemittelfüllmenge die zwei Ventile. Dadurch ist auf einfache Weise die Kältemittelfüllmenge des mit Kältemittel durchströmten Bereichs einstellbar.

Gemäß einer vorteilhaften Weiterbildung ist die Wärmepumpe derart ausgebildet, dass sie auch im Klimabetrieb zum Kühlen von Luft für einen und/oder in einem Fahrzeuginnenraum betreibbar ist, wobei der Kältemittelkreislauf zwischen Wärmepumpenbetrieb und Klimabetrieb umschaltbar ausgebildet ist, und der zweite Wärmetauscher umschaltbar auch als Verdampfer und der dritte Wärmetauscher umschaltbar auch als Gaskühler/Kondensator betreibbar sind, wobei sie jeweils für Kältemittel einen Gaskühler-/Kondensatorbereich und einen Verdampferbereich aufweisen. Bei einer derartigen Ausführung sind die beiden Wärmetauscher jeweils als Verdampfer oder Gaskühler/Kondensator einfach umzuschalten einsetzbar, wobei auch ein Mischbetrieb eines Wärmetauschers möglich ist.

Nach einer vorteilhaften Weiterbildung der Wärmepumpe ist im Kältemittelkreislauf der schließbare Bypass auch den Gaskühler-/Kondensatorbereich des dritten Wärmetauschers umgehend angeordnet, und der Kältemittelkreislauf ist derart ausgebildet, dass der Bypass soweit öffenbar ist, dass mit geöffnetem Bypass im Klimabetrieb der erste Wärmetauscher ohne den dritten Wärmetauscher betreibbar ist, was die Flexibilität der Wärmepumpe erhöht.

Ferner ist eine Ausführung der Wärmepumpe von Vorteil, bei der die Mittel zur Einstellung der Kältemittelfüllmenge des im Wärmepumpenbetrieb mit Kältemittel durchströmten Bereichs des Kältemittelkreislaufs die zwei Ventile für Kältemittelverlagerung in oder aus dem im Kältemittelkreislauf im Wärmepumpenbetrieb sonst ungenutzten Gaskühler-/Kondensatorbereich des dritten Wärmetauschers umfassen. Dadurch lässt sich im Wärmepumpenbetrieb ohne einen Kältemittelsammelbehälter die Kältemittelfüllmenge des mit Kältemittel durchströmten Bereichs einstellen und so der Hochdruck im Hochdruckbereich des Kältemittelkreis-laufs an den jeweiligen Betriebsmodus anpassen.

Gemäß einer vorteilhaften Weiterbildung umfasst die Wärmepumpe im Niederdruckbereich des Kältemittelkreislaufs einen als Verdampfer betreibbaren und als Kältemittel-Flüssigkeits-Wärmetauscher ausgebildeten in Parallelschaltung zum Verdampferbereich des dritten Wärmetauschers angeordneten vierten Wärmetauscher. Dadurch ist alternativ oder gleichzeitig zum Verdampferbetrieb des dritten Wärmetauschers eine Flüssigkeit wie beispielsweise ein Wasser-Glykol-Gemisch mit dem Kältemittel kühlbar, was die Betriebsmöglichkeiten der Wärmepumpe erweitert.

Vorzugsweise umfasst der Kältemittelkreislauf einen den ersten Wärmetauscher umgehenden schließbaren weiteren Bypass, und der Kältemittelkreislauf ist derart ausgebildet, dass der weitere Bypass soweit öffenbar ist, dass mit geöffnetem weiterem Bypass im Wärmepumpenbetrieb der zweite Wärmetauscher als Gaskühler/Kondensator ohne den ersten Wärmetauscher betreibbar ist. Damit verfügt die Wärmepumpe über einen weiteren Betriebsmodus, wodurch deren Flexibilität erhöht ist.

Bevorzugt umfasst die Wärmepumpe eine derart ausgebildete Regelung zum Steuern des Kältemittelkreislaufs, dass damit das Öffnen/Schließen des den Gaskühler-/Kondensatorbereich des zweiten Wärmetauschers umgehenden Bypasses sowie die Mittel zum Einstellen der Kältemittelfüllmenge des im Wärmepumpenbetrieb mit Kältemittel durchströmten Bereichs des Kältemittelkreislaufs steuerbar sind. Mit der Regelung lassen sich der Betriebsmodus des Wärmepumpenbetriebs automatisch einstellen und die Kältemittelfüllmenge darauf jeweils automatisch anpassen.

Die Aufgabe hinsichtlich eines Fahrzeugs wird durch ein Fahrzeug, wie insbesondere ein Nutzfahrzeug, das eine erfindungsgemäße Wärmepumpe aufweist, gelöst. Hinsichtlich der Vorteile sowie vorteilhaften Ausführungen und Weiterbildungen gelten entsprechend die diesbezüglichen obigen Angaben zur erfindungsgemäßen Wärmepumpe.

Die Aufgabe hinsichtlich eines Verfahrens zum Betreiben einer Wärmepumpe in einem Fahrzeug wird durch die Merkmale des Nebenanspruchs für ein Verfahren gelöst. Dadurch dass mit dem Verfahren eine erfindungsgemäße Wärmepumpe in einem Fahrzeug betrieben wird, wobei der Kältemittelkreislauf einschließlich der Mittel zum Einstellen der Kältemittelfüllmenge des im Wärmepumpenbetrieb mit Kältemittel durchströmten Bereichs des Kältemittelkreislaufs derart eingestellt werden kann, dass die Wärmepumpe wahlweise in einem der zumindest zwei ansteuerbaren Betriebsmodi, erstens des Wärmepumpenbetriebs mit von Kältemittel durchströmten als Gaskühler/Kondensator betriebenen ersten und zweiten Wärmetauscher zum Erwärmen einer durch den ersten Wärmetauscher strömenden Flüssigkeit sowie zum Heizen eines Mediums durch den zweiten Wärmetauscher, wobei der den Gaskühler-/Kondensatorbereich des zweiten Wärmetauschers umgehende Bypass geschlossen ist und die Kältemittelfüllmenge des mit Kältemittel durchströmten Bereichs des Kältemittelkreislaufs auf den für diesen Betriebsmodus angepassten Hochdruck im Hochdruckbereich des Kältemittelkreislaufs eingestellt ist, oder zweitens des Wärmepumpenbetriebs mit außer Funktion befindlichem zweiten Wärmetauscher sowie von Kältemittel durchströmten als Gaskühler/Kondensator betriebenen ersten Wärmetauscher zum Erwärmen einer durch den ersten Wärmetauscher strömenden Flüssigkeit, wobei der den Gaskühler-/Kondensatorbereich des zweiten Wärmetauschers umgehende Bypass geöffnet ist, und die Kältemittelfüllmenge des mit Kältemittel durchströmten Bereichs des Kältemittelkreislaufs auf den für diesen Betriebsmodus angepassten Hochdruck im Hochdruckbereich des Kältemittelkreislaufs eingestellt ist, betrieben wird, wird das Problem gelöst.

Hinsichtlich der Vorteile sowie vorteilhaften Ausführungen und Weiterbildungen gelten entsprechend die diesbezüglichen obigen Angaben zur erfindungsgemäßen Wärmepumpe.

Gemäß einer vorteilhaften Ausführung des Verfahrens werden bei einer geeigneten erfindungsgemäßen Wärmepumpe als Kältemittel CO2 im Hochdruckbereich des Kältemittelkreislaufs überkritisch betrieben, und, sowohl beim ersten Betriebsmodus als auch beim zweiten Betriebsmodus der Wärmepumpe, durch Wärmeabgabe des Kältemittels im ersten Wärmetauscher eine strömende Flüssigkeit auf eine Temperatur von 60 °C oder darüber erwärmt. Dadurch ist im Wärmepumpenbetrieb bei beiden Betriebsmodi die Temperatur der Flüssigkeit ausreichend hoch.

Vorzugsweise kann mit einer geeigneten erfindungsgemäßen Wärmepumpe der Kältemittelkreislauf einschließlich des Öffnungsgrads des den Gaskühler-/Kondensatorbereich des zweiten Wärmetauschers umgehenden Bypasses derart eingestellt werden, dass die Wärmepumpe wahlweise in dem weiteren ansteuerbaren Betriebsmodus des Wärmepumpenbetriebs mit von Kältemittel durchströmten als Gaskühler/Kondensator betriebenen ersten Wärmetauscher zum Erwärmen einer durch den ersten Wärmetauscher strömenden Flüssigkeit und von einem in der Größe stufenlos eingestellten Kältemittelteilvolumenstrom durchströmten Gaskühler-/Kondensatorbereich des zweiten Wärmetauschers zum Heizen eines Mediums, wobei der den Gaskühler-/Kondensatorbereich des zweiten Wärmetauschers umgehende Bypass mit einem stufenlos eingestellten Öffnungsgrad für den übrigen Kältemittelteilvolumenstrom geöffnet ist und die Kältemittelfüllmenge des mit Kältemittel durchströmten Bereichs des Kältemittelkreislaufs auf den für diesen Betriebsmodus angepassten Hochdruck im Hochdruckbereich des Kältemittelkreislaufs eingestellt ist, betrieben wird. Damit wird die Wärmepumpe mit je nach Bedarf stufenlos angepasster Heizleistung des zweiten Wärmetauschers betrieben.

Nach einer vorteilhaften Weiterbildung des Verfahrens kann bei einer geeigneten erfindungsgemäßen Wärmepumpe der Kältemittelkreislauf derart eingestellt werden, dass die Wärmepumpe wahlweise in dem weiteren ansteuerbaren Betriebsmodus des Klimabetriebs mit direkter oder indirekter Wärmeaufnahme des Kältemittels aus Luft für einen und/oder in einem Fahrzeuginnenraum, betrieben wird. Der Fahrzeuginnenraum ist so kühlbar.

Gemäß einer vorteilhaften Ausführung des Verfahrens erfolgt bei einer geeigneten erfindungsgemäßen Wärmepumpe die Einstellung der Kältemittelfüllmenge des mit Kältemittel durchströmten Bereichs des Kältemittelkreislaufs auf den für den jeweiligen Betriebsmodus angepassten Hochdruck im Hochdruckbereich des Kältemittelkreislaufs durch entsprechendes Steuern der beiden Ventile für Kältemittelverlagerung in oder aus einem Kältemittelsammelbehälter. Bei einer geeigneten erfindungsgemäßen Wärmepumpe ohne Kältemittelsammelbehälter erfolgt bei einer Ausführung des Verfahrens die Einstellung der Kältemittelfüllmenge des mit Kältemittel durchströmten Bereichs des Kältemittelkreislaufs auf den für den jeweiligen Betriebsmodus des Wärmepumpenbetriebs angepassten Hochdruck im Hochdruckbereich des Kältemittelkreislaufs durch entsprechendes Steuern des/der Ventil(s)/e für Kältemittelverlagerung in oder aus einem im Kältemittelkreislauf im Wärmepumpenbetrieb sonst ungenutzten Gaskühler-/Kondensatorbereich des dritten Wärmetauschers. Dieses Verfahrens benötigt keinen extra Kältemittelsammelbehälter.

Nach einer vorteilhaften Weiterbildung des Verfahrens kann bei einer geeigneten erfindungsgemäßen Wärmepumpe der Kältemittelkreislauf so eingestellt werden, dass die Wärmepumpe wahlweise in dem weiteren ansteuerbaren Betriebsmodus des Wärmepumpenbetriebs mit nicht von Kältemittel durchströmten ersten Wärmetauscher und von Kältemittel durchströmten als Gaskühler/Kondensator zum Heizen betriebenen zweiten Wärmetauscher, wobei der den ersten Wärmetauscher umgehende weitere Bypass geöffnet ist und die Kältemittelfüllmenge des mit Kältemittel durchströmten Bereichs des Kältemittelkreislaufs auf den für diesen Betriebsmodus angepassten Hochdruck im Hochdruckbereich des Kältemittelkreislaufs eingestellt ist, betrieben wird. Damit läuft die Wärmepumpe wählbar ohne Erwärmung von Flüssigkeit im ersten Wärmetauscher.

Vorzugsweise enthält das Verfahren zum Betreiben einer geeigneten erfindungsgemäßen Wärmepumpe die Möglichkeit den vierten Wärmetauscher bei jedem eingestellten Betriebsmodus als Verdampfer zur Kühlung einer durch ihn strömenden Flüssigkeit zu- und abschaltbar zu betreiben. Dadurch kann bei Bedarf unabhängig vom Betriebsmodus Flüssigkeit gekühlt werden.

### Kurze Beschreibung der Zeichnungen:

Anhand der Zeichnungen werden Ausführungsbeispiele der Erfindung erläutert.

Es zeigen
Fig. 1 in Blockdarstellung ein Ausführungsbeispiel einer erfindungsgemäßen Wärmepumpe;
Fig. 2 in Blockdarstellung ein weiteres Ausführungsbeispiel einer erfindungsgemäßen Wärmepumpe;
Fig. 3 in Blockdarstellung ein weiteres Ausführungsbeispiel einer erfindungsgemäßen Wärmepumpe;
Fig. 4 in Blockdarstellung ein weiteres Ausführungsbeispiel einer erfindungsgemäßen Wärmepumpe;
Fig. 5 in schematischer Darstellung ein Ausführungsbeispiel eines Fahrzeugs mit einer erfindungsgemäßen Wärmepumpe;
Fig. 6a ein Druck-Enthalpie-Diagramm mit dem Zyklus des Kältemittelkreislaufs eines im ersten Betriebsmodus laufenden erfindungsgemäßen Verfahrens;
Fig. 6b ein Druck-Enthalpie-Diagramm mit dem Zyklus des Kältemittelkreislaufs eines im zweiten Betriebsmodus laufenden erfindungsgemäßen Verfahrens; und
Fig. 7 als Flussdiagramm ein Ausführungsbeispiel eines erfindungsgemäßen Verfahrens.

Ausführliche Beschreibung der Erfindung:
Alle Zeichnungen sind schematisch zu verstehen. Auf maßstabsgetreue Abbildungen wurde zum Zwecke erhöhter Klarheit der Darstellung verzichtet.

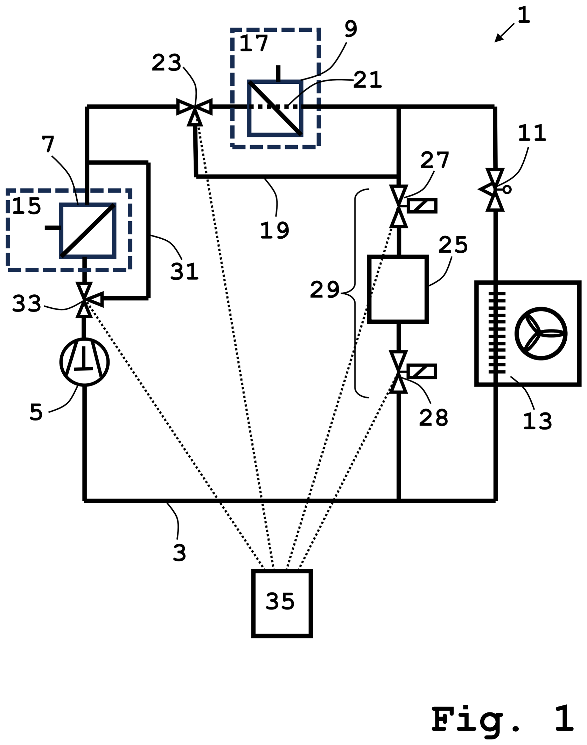

In Figur 1 ist in Blockdarstellung ein Ausführungsbeispiel einer erfindungsgemäßen Wärmepumpe 1 für ein Fahrzeug gezeigt. Die Wärmepumpe 1 weist einen Kältemittelkreislauf 3 auf, der mit Kältemittelleitungen im Kreislauf verbunden einen Verdichter 5, einen als Gaskühler/Kondensator betreibbaren und als Kältemittel-Flüssigkeits-Wärmetauscher ausgebildeten ersten Wärmetauscher 7, einen als Gaskühler/Kondensator betreibbaren zweiten Wärmetauscher 9, ein als Expansionsventil ausgebildetes Expansionsorgan 11 und einen als Verdampfer betreibbaren dritten Wärmetauscher 13 umfasst.

In diesem Fall sowie auch in den weiteren Figuren gezeigten Ausführungsbeispielen einer Wärmepumpen 1 ist das Kältemittel CO2, welches im dafür ausreichend druckfest ausgebildeten Hochdruckbereich des Kältemittelkreislaufs 3 überkritisch betreibbar ist. Denkbar sind auch Ausführungen der erfindungsgemäßen Wärmepumpe 1 mit einem unterkritisch zu betreibenden Kältemittelkreislauf 3 für ein Kältemittel, wie zum Beispiel R1234yf.

Der erste Wärmetauscher 7 ist flüssigkeitsseitig an einen Flüssigkeitskreislauf 15 angeschlossen, sodass dort komprimiertes heißes Kältemittel Wärme an die Flüssigkeit des Flüssigkeitskreislaufs 15 abgeben und diese dabei auf eine Temperatur von mindestens 60 °C erwärmen kann. Die Flüssigkeit ist hierbei Wasser oder ein Wasser-Glykol-Gemisch. Der erste Wärmetauscher 7 ist im Wärmepumpenbetrieb in Kältemittelströmungsrichtung stromaufwärts des zweiten Wärmetauschers 9 angeordnet. Diese Reihenschaltung liegt jedenfalls dann vor, wenn sie beide in Betrieb sind, also mit komprimiertem Kältemittel durchströmt werden. Der zweite Wärmetauscher 9 ist als Innenwärmetauscher ausgebildet und angeordnet auch ein Flüssigkeits-Kältemittel-Wärmetauscher, an den flüssigkeitsseitig ein weiterer Flüssigkeitskreislauf 17 für eine Wärmetransportflüssigkeit angeschlossen ist, mit der vom Kältemittel abgegebene Wärme zum Heizen eines Mediums transportierbar ist. Das zu heizende Medium ist Luft für einen oder in einem Fahrzeuginnenraum. Der dritte Wärmetauscher 13 ist als Luft-Kältemittel-Wärmetauscher als Außenwärmetauscher ausgebildet und angeordnet zur Wärmeaufnahme des im Expansionsorgan 11 entspannten Kältemittels von Luft betreibbar, die danach nach außen aus dem Fahrzeug strömt.

Der Bypass 19 im Kältemittelkreislauf 3 umgeht den Gaskühler-/Kondensatorbereich 21 des zweiten Wärmetauschers 9. Mit dem als Drei-Wege-Ventil ausgebildeten Ventil 23 kann der Bypass 19 geschlossen und geöffnet werden. Bei ausreichend großer Öffnung des Bypasses 19 und geschlossenem Gaskühler-/Kondensatorbereich 21 des zweiten Wärmetauschers 9 wird im Wärmepumpenbetrieb der erste Wärmetauscher 7 ohne den zweiten Wärmetauscher 9 betrieben. Hingegen sind im Wärmepumpenbetrieb bei geschlossenem Bypass 19 und geöffnetem Gaskühler-/Kondensatorbereich 21 der zweite Wärmetauscher 9 und der erste Wärmetauscher 7 gemeinsam betreibbar, sodass sowohl durch den ersten Wärmetauscher 7 strömendes Wasser oder Wasser-Glykol-Gemisch als auch Luft für einen oder in einem Fahrzeuginnenraum gleichzeitig erwärmbar sind.

Parallelgeschaltet zum Expansionsorgan 11 und dritten Wärmetauscher 13 ist der Kältemittelsammelbehälter 25 mit einem Ventil 27 für dessen Einlass und einem Ventil 28 für dessen Auslass. Die Kältemittelfüllmenge des Kältemittelsammelbehälters 25 ist mit den beiden Ventilen 27, 28 einstellbar. Das dort gesammelte Kältemittel ist dem mit Kältemittel durchströmten Bereich des Kältemittelkreislaufs 3 entzogen, sodass der Kältemittelsammelbehälter 25 und die beiden Ventile 27, 28 Mittel 29 zur Einstellung der Kältemittelfüllmenge des im Wärmepumpenbetrieb mit Kältemittel durchströmten Bereiche des Kältemittelkreislaufs 3 sind.

Ferner verfügt der Kältemittelkreislauf 3 über einen weiteren Bypass 31 zur Umgehung des ersten Wärmetauschers 7, der mit dem als Drei-Wege-Ventil ausgebildeten Ventil 33 geöffnet und geschlossen werden kann. Bei Öffnung des weiteren Bypasses 31 ist im Wärmepumpenbetrieb zum Heizen nur der zweite Wärmetauscher 9 als Gaskühler/Kondensator in Betrieb.

Zumindest die Ventile 23, 27, 28, 33 werden von der Regelung 35 gesteuert. Sie verfügt beispielsweise über einen Mikroprozessor. Mit der Regelung 35 zum Steuern des Kältemittelkreislaufs 3 werden insbesondere das Öffnen und Schließen des den Gaskühler-/Kondensatorbereich 21 des zweiten Wärmetauschers 9 umgehenden Bypasses 19 sowie die Mittel 29 zum Einstellen der Kältemittelfüllmenge des im Wärmepumpenbetrieb mit Kältemittel durchströmten Bereichs des Kältemittelkreislaufs 3 gesteuert. Damit wird automatisch die Kältemittelfüllmenge im Kältemittelsammelbehälter 25 auf den jeweiligen Betriebsmodus, ob mit erstem Wärmetauscher 7 und zweitem Wärmetauscher 9, oder mit erstem Wärmetauscher 7 ohne zweitem Wärmetauscher 9 oder mit zweitem Wärmetauscher 9 ohne erstem Wärmetauscher 7 in Funktion, optimiert angepasst.

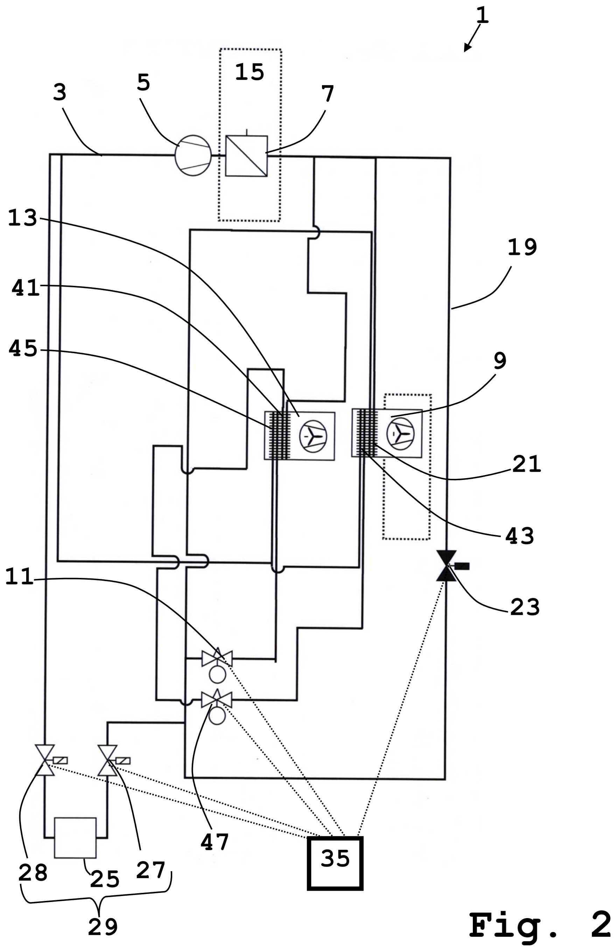

In Fig. 2 ist in Blockdarstellung ein weiteres Ausführungsbeispiel einer erfindungsgemäßen Wärmepumpe 1 für ein Fahrzeug gezeigt. Im Kältemittelkreislauf 3 existiert kein schaltbarer weiterer Bypass zur Umgehung des ersten Wärmetauschers 7, sodass bei Betrieb immer zuvor im Verdichter 5 komprimiertes heißes Kältemittel durch den als Flüssigkeits-Kältemittel-Wärmetauscher ausgebildeten ersten Wärmetauscher 7 strömt. Damit kann dort unabhängig vom jeweiligen Betriebsmodus die Flüssigkeit wie zum Beispiel Wasser oder ein Wasser-Glykol-Gemisch des an den ersten Wärmetauscher 1 angeschlossenen Flüssigkeitskreislaufs 15 erwärmt werden, wobei Temperaturen von mindestens 60 °C erreicht werden. Der zweite Wärmetauscher 9 ist als Innenwärmetauscher ausgebildet und angeordnet ein Luft-Kältemittel-Wärmetauscher, in dem Wärmetausch zwischen Kältemittel und Luft für einen und/oder in einem Fahrzeuginnenraum stattfinden kann. Der dritte Wärmetauscher 13 ist als Außenwärmetauscher ausgebildet und angeordnet ein Luft-Kältemittel-Wärmetauscher, in dem Wärmetausch zwischen Kältemittel und Luft, die danach nach außen aus dem Fahrzeug strömt, erfolgen kann. Der zweite Wärmetauscher 9 und der dritte Wärmetauscher 13 weisen jeweils einen Gaskühler-/Kondensatorbereich 21, 41 und einen Verdampferbereich 43, 45 auf, sodass sie jeweils umschaltbar als Gaskühler/Kondensator und als Verdampfer betreibbar sind. Die Wärmepumpe 1 mit dem Kältemittelkreislauf 3 kann damit umschaltbar im Wärmepumpenbetrieb oder zum Kühlen von Luft für einen und/oder in einem Fahrzeuginnenraum im Klimabetrieb laufen.

Der erste Wärmetauscher 7 ist im Wärmepumpenbetrieb in Kältemittelströmungsrichtung stromaufwärts des zweiten Wärmetauschers 9 angeordnet. Diese Reihenschaltung liegt jedenfalls dann vor, wenn sie dabei beide in Betrieb sind, also auch der Gaskühler-/Kondensatorbereich 21 des zweiten Wärmetauschers 9 mit komprimiertem Kältemittel durchströmt wird.

Der Bypass 19 im Kältemittelkreislauf 3 umgeht den Gaskühler-/Kondensatorbereich 21 des zweiten Wärmetauschers 9. Mit dem als Magnetventil ausgebildeten Ventil 23 kann der Bypass 19 geschlossen und geöffnet werden. Bei ausreichend großer Öffnung des Bypasses 19 wird im Wärmepumpenbetrieb der erste Wärmetauscher 7 ohne den zweiten Wärmetauscher 9 betrieben. Hingegen sind im Wärmepumpenbetrieb bei geschlossenem Bypass 19 und damit geöffnetem Gaskühler-/Kondensatorbereich 21 der erste Wärmetauscher 7 und der zweite Wärmetauscher 9 gemeinsam betreibbar, sodass sowohl durch den ersten Wärmetauscher 7 strömendes Wasser oder Wasser-Glykol-Gemisch als auch im zweiten Wärmetauscher 9 Luft für einen und/oder in einem Fahrzeuginnenraum gleichzeitig erwärmbar bzw. heizbar sind. Eine denkbare Variante ist die Ausbildung des im Bypass 19 angeordneten Ventils 23 als ein für den Durchlass von Kältemittel stufenlos regelbares Ventil. Damit ist die Größe des Volumenstrom von Kältemittel durch den Gaskühler-/Kondensatorbereich 21 des zweiten Wärmetauschers 9 gut einstellbar und somit auch seine Wärmeleistung.

Das eine schließbar als Expansionsventil ausgebildete Expansionsorgan 11 ist in Kältemittelströmungsrichtung stromaufwärts des Verdampferbereichs 45 des dritten Wärmetauschers 13 angeordnet. Es ist im Wärmepumpenbetrieb des Kältemittelkreislaufs zum Expandieren von Kältemittel in Funktion und im Klimabetrieb geschlossen. Hingegen ist das andere schließbar als Expansionsventil ausgebildete Expansionsorgan 47 im Wärmepumpenbetrieb geschlossen und im Klimabetrieb zum Expandieren von Kältemittel im Einsatz. Dieses Expansionsorgan 47 ist in Kältemittelströmungsrichtung stromaufwärts des Verdampferbereichs 43 des zweiten Wärmetauschers 9 angeordnet.

Parallelgeschaltet zum Expansionsorgan 11 und dem Verdampferbereich 45 des dritten Wärmetauschers 13 ist der Kältemittelsammelbehälter 25 mit dem Ventil 27 für dessen Einlass und dem Ventil 28 für dessen Auslass. Die Kältemittelfüllmenge des Kältemittelsammelbehälters 25 ist mit den beiden Ventilen 27, 28 einstellbar. Das dort gesammelte Kältemittel ist dem mit Kältemittel durchströmten Bereich des Kältemittelkreislaufs 3 entzogen, sodass der Kältemittelsammelbehälter 25 und die beiden Ventile 27, 28 Mittel 29 zur Einstellung der Kältemittelfüllmenge des im Wärmepumpenbetrieb mit Kältemittel durchströmten Bereiche des Kältemittelkreislaufs 3 sind.

Zumindest die Ventile 11, 23, 27, 28, 47 werden von der Regelung 35 gesteuert. Sie verfügt beispielsweise über einen Mikroprozessor. Mit der Regelung 35 zum Steuern des Kältemittelkreislaufs 3 werden insbesondere das Öffnen und Schließen des den Gaskühler-/Kondensatorbereich 21 des zweiten Wärmetauschers 9 umgehenden Bypasses 19 sowie die Mittel 29 zum Einstellen der Kältemittelfüllmenge des im Wärmepumpenbetrieb mit Kältemittel durchströmten Bereichs des Kältemittelkreislaufs 3 gesteuert. Damit wird automatisch die Kältemittelfüllmenge im Kältemittelsammelbehälter 25 auf den jeweiligen Betriebsmodus, ob im Wärmepumpenbetrieb mit erstem Wärmetauscher 7 und zweitem Wärmetauscher 9 oder mit erstem Wärmetauscher 7 ohne zweiten Wärmetauscher 9 in Funktion oder im Klimabetrieb, optimiert angepasst.

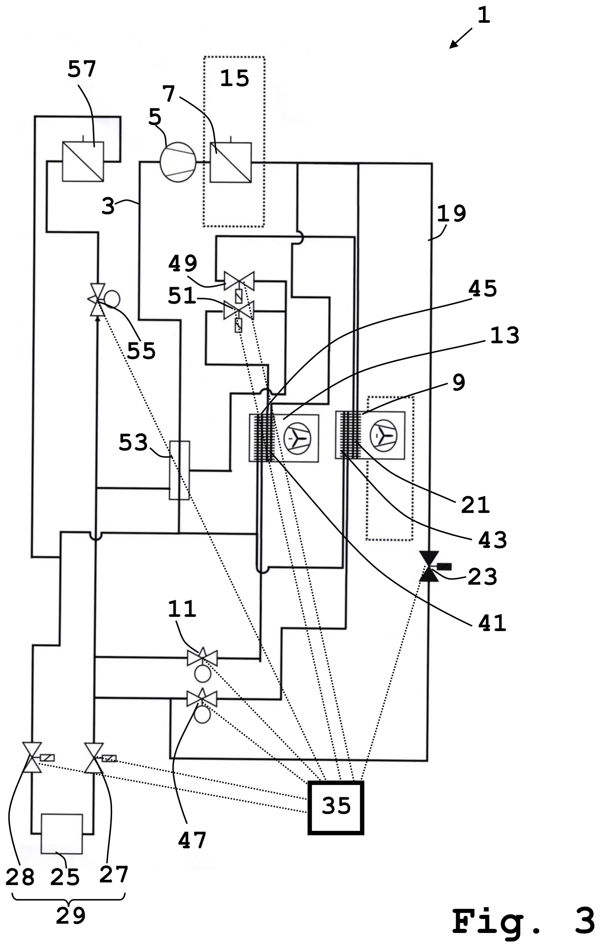

In Fig. 3 ist in Blockdarstellung ein weiteres Ausführungsbeispiel einer erfindungsgemäßen Wärmepumpe 1 für ein Fahrzeug gezeigt. Die Wärmepumpe 1 mit dem Kältemittelkreislauf 3 kann umschaltbar im Wärmepumpenbetrieb oder zum Kühlen von Luft für einen und/oder in einem Fahrzeuginnenraum im Klimabetrieb laufen. Sämtliche in Fig. 2 enthaltenen und dazu beschriebenen Komponenten mit ihren dortigen Bezugszeichen sind auch in der in Fig. 3 gezeigten Wärmepumpe 1 mit diesen Bezugszeichen enthalten, sodass die Beschreibung der Komponenten der Wärmepumpe 1 entsprechend derer zu Fig. 2 ist. Jedoch bestehen zu Fig. 2 die folgenden Unterschiede:
In Kältemittelströmungsrichtung befindet sich stromabwärts der Gaskühler-/Kondensatorbereiche 21, 41 des zweiten und dritten Wärmetauschers 9, 13 jeweils ein als Magnetventil ausgebildetes zusätzliches Ventil 49, 51 zum Öffnen und Schließen des jeweiligen Gaskühler-/Kondensatorbereichs 21, 41. Die Kältemittelleitungen werden stromabwärts dieser beiden Ventile 49, 51 noch vor der Hochdruckseite des internen Wärmetauschers 53 zusammengeführt und nach dem internen Wärmetauscher 53 in mehrere Kältemittelleitungsäste aufgeteilt, wovon je ein Ast zu den beiden als schließbare Expansionsventile ausgebildeten Expansionsorgangen 11 und 47 vor den Verdampferbereichen 43, 45 des zweiten und dritten Wärmetauschers 9, 13 führt, ein dritter Ast zum Kältemittelsammelbehälter 25 mit den Ventilen 27, 28 für seinen Einlass und Auslass führt und ein optionaler vierter Ast zu dem als schließbares Expansionsventil ausgebildeten optionalen dritten Expansionsorgan 55 stromaufwärts des als Flüssigkeits-Kältemittel-Wärmetauscher ausgebildeten optionalen vierten Wärmetauschers 57 führt. Der vierte Wärmetauscher 57 ist in Parallelschaltung zum Verdampferbereich 45 des dritten Wärmetauschers 13 angeordnet. Der optionale vierte Wärmetauscher 57 ist flüssigkeitsseitig an einen Flüssigkeitskreislauf angeschlossen, sodass mit dem im vierten Wärmetauscher 57 verdampfenden Kältemittel die Flüssigkeit wie beispielsweise Wasser oder ein Wasser-Glykol-Gemisch nach Bedarf kühlbar ist. Die vier Kältemittelleitungsäste werden im Niederdruckbereich des Kältemittelkreislaufs 3 dann vor der Niederdruckseite des internen Wärmetauschers 53 wieder zusammengeführt, sodass der gesamte Kältemittelmittelstrom vereint zum Einlass des Verdichters 5 strömen kann.

Im Kältemittelkreislauf 3 umgeht der schließbare Bypass 19 nicht nur den Gaskühler-/Kondensatorbereich 21 des zweiten Wärmetauschers 9 sondern auch den Gaskühler-/Kondensatorbereich 41 des dritten Wärmetauschers 13. Mit ausreichend geöffnetem als Magnetventils ausgebildeten Ventil 23 ist sowohl bei geschlossenem Ventils 49 im Wärmepumpenbetrieb der erste Wärmetauscher 7 ohne den als Innenwärmetauscher ausgebildeten und angeordneten zweiten Wärmetauscher 9 betreibbar, als auch bei statt des Ventils 49 geschlossenem Ventil 51 im Klimabetrieb der erste Wärmetauscher 7 ohne den als Außenwärmetauscher ausgebildeten und angeordneten dritten Wärmetauscher 13 betreibbar.

Zumindest werden die Ventile 11, 23, 27, 28, 47, 49, 51 und 55 von der Regelung 35 gesteuert. Sie verfügt beispielsweise über einen Mikroprozessor. Mit der Regelung 35 zum Steuern des Kältemittelkreislaufs 3 werden insbesondere das Öffnen und Schließen des die Gaskühler-/Kondensatorbereiche 21, 41 des zweiten und dritten Wärmetauschers 9, 13 umgehenden Bypasses 19 sowie die Mittel 29 zum Einstellen der Kältemittelfüllmenge des im Wärmepumpenbetrieb mit Kältemittel durchströmten Bereichs des Kältemittelkreislaufs 3, als auch das Zu- und Abschalten des vierten Wärmetauschers 57 gesteuert. Damit wird automatische die Kältemittelfüllmenge im Kältemittelsammelbehälter 25 auf den jeweiligen Betriebsmodus, wie insbesondere ob im Wärmepumpenbetrieb mit erstem Wärmetauscher 7 und zweitem Wärmetauscher 9 oder mit erstem Wärmetauscher 7 ohne zweitem Wärmetauscher 9 in Funktion oder im Klimabetrieb mit erstem Wärmetauscher 7 und drittem Wärmetauscher 13 oder mit erstem Wärmetauscher 7 ohne drittem Wärmetauscher 13 in Funktion, optimiert angepasst.

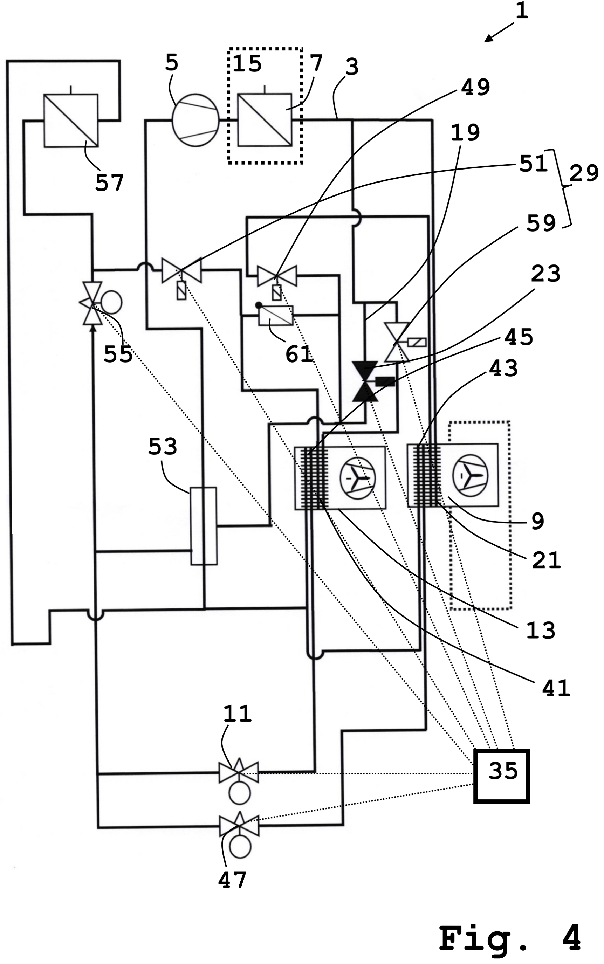

In Fig. 4 ist in Blockdarstellung ein weiteres Ausführungsbeispiel einer erfindungsgemäßen Wärmepumpe 1 für ein Fahrzeug gezeigt. Die Wärmepumpe 1 mit dem Kältemittelkreislauf 3 kann umschaltbar im Wärmepumpenbetrieb oder zum Kühlen von Luft für einen und/oder in einem Fahrzeuginnenraum im Klimabetrieb laufen. Der zweite Wärmetauscher 9 ist als Innenwärmetauscher ausgebildet und angeordnet zum direkten oder in einer Abwandlung indirekten Heizen von Luft für einen und/oder in einem Fahrzeuginnenraum betreibbar und der dritte Wärmetauscher 13 ist als Außenwärmetauscher ausgebildet und angeordnet zur Wärmeaufnahme des Kältemittels direkt oder in einer Abwandlung indirekt von danach nach außen aus dem Fahrzeug strömender Luft betreibbar. Im Unterschied zu den in den Fig. 1 bis 3 gezeigten Ausführungsbeispielen verfügt die Wärmepumpe 1 nicht über einen extra Kältemittelsammelbehälter mit Ventilen für dessen Einlass und Auslass, sondern die Mittel 29 zum Einstellen der Kältemittelfüllmenge des im Wärmepumpenbetrieb mit Kältemittel durchströmten Bereichs des Kältemittelkreislaufs 3 umfassen die zwei Ventile 59 und 51 für Kältemittelverlagerung in oder aus dem im Kältemittelkreislauf im Wärmepumpenbetrieb sonst ungenutzten Gaskühler-/Kondensatorbereich 41 des dritten Wärmetauschers 13. Durch Öffnen des als Magnetventil ausgebildeten Ventils 51 kann aus dem Gaskühler-/Kondensatorbereich 41 Kältemittel in den Niederdruckbereich des Kältemittelkreislaufs 3 abgelassen werden, wie hier, ohne darauf beschränkt zu sein, stromaufwärts des optionalen vierten Wärmetauschers 57. Mit dem als Magnetventil ausgebildeten Ventil 59 lässt sich hingegen der Zulauf von komprimiertem Kältemittel in den Gaskühler-/Kondensatorbereich 41 regulieren. Der mit dem als Magnetventil ausgebildeten Ventil 23 schließbare Bypass 19 umgeht den Gaskühler-/Kondensatorbereich 21 des zweiten Wärmetauschers 9 und ist zumindest bei geschlossenem Ventil 49 soweit öffenbar, dass mit geöffnetem Bypass 19 im Wärmepumpenbetrieb der erste Wärmetauscher 7 ohne den zweiten Wärmetauscher 9 betreibbar ist. Der Bypass 19 führt in Kältemittelströmungsrichtung stromaufwärts der Hochdruckseite des internen Wärmetauschers 53 mit der vom Ventil 49 kommenden Kältemittelleitung zusammen. Das weitere stromabwärts des Gaskühler-/Kondensatorbereich 41 des dritten Wärmetauschers 13 angeordnete Ventil 61 ist beim Klimabetrieb des Kältemittelkreislaufs 3 geöffnet. Ansonsten entspricht der Aufbau des Kältemittelkreislaufs 3 dem in Fig. 3 gezeigten und dazu beschriebenen Kältemittelkreislaufs 3. Diesbezüglich sind die Komponenten mit Bezugszeichen gleich.

Zumindest werden die Ventile 11, 23, 47, 49, 51, 55 und 59 von der Regelung 35 gesteuert. Sie verfügt beispielsweise über einen Mikroprozessor. Mit der Regelung 35 zum Steuern des Kältemittelkreislaufs 3 werden insbesondere das Öffnen und Schließen des den Gaskühler-/Kondensatorbereich 21 des zweiten Wärmetauschers 9 umgehenden Bypasses 19 sowie die Mittel 29 zum Einstellen der Kältemittelfüllmenge des im Wärmepumpenbetrieb mit Kältemittel durchströmten Bereichs des Kältemittelkreislaufs 3 gesteuert. Damit wird automatisch die Kältemittelfüllmenge des Gaskühler-/Kondensatorbereichs 41 des dritten Wärmetauschers 13 auf den jeweiligen Betriebsmodus, ob im Wärmepumpenbetrieb mit erstem Wärmetauscher 7 und zweitem Wärmetauscher 9 oder mit erstem Wärmetauscher 7 ohne zweitem Wärmetauscher 13 in Funktion, optimiert angepasst.

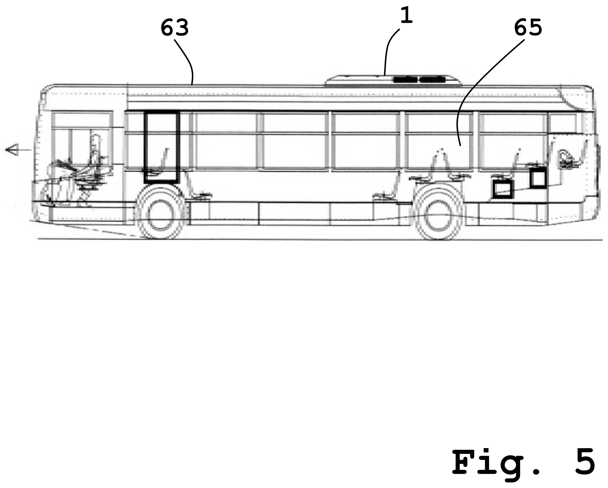

In Fig. 5 ist schematisch ein Ausführungsbeispiel eines Fahrzeugs 63 mit einer erfindungsgemäßen Wärmepumpe 1 dargestellt. Es handelt sich in diesem Fall bei dem Fahrzeug 63 um einen Omnibus. Denkbar ist als Fahrzeug 63 insbesondere auch ein Nutzfahrzeug einer anderen Art, wie beispielsweise ein landwirtschaftliches Nutzfahrzeug.

Das Fahrzeug 1 weist eine erfindungsgemäße Wärmepumpe 1 wie zum Beispiel eine der in Fig. 1 bis 4 gezeigten auf. Die Wärmpumpe 1 ist als Aufdachanlage angeordnet. Die Luft für den Fahrzeuginnenraum 65 ist mit ihr heizbar.

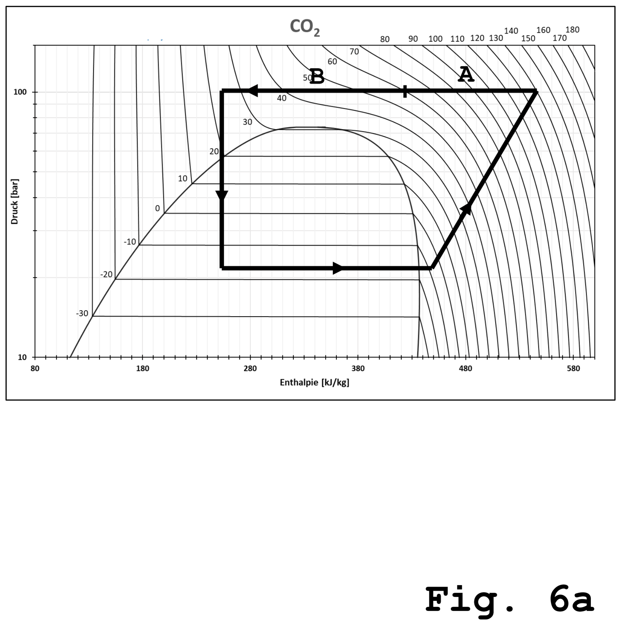

In Fig. 6a ist ein Druck-Enthalpie-Diagramm mit dem Zyklus des Kältemittelkreislaufs eines im ersten Betriebsmodus laufenden erfindungsgemäßen Verfahrens dargestellt. Mit dem Verfahren wird eine erfindungsgemäße Wärmepumpe, wie beispielsweise irgendeine der in Fig. 1 bis 4 gezeigten, in einem Fahrzeug, wie zum Beispiel das in Fig. 5 gezeigte, betrieben. Dabei ist im Kältemittelkreislauf im Wärmepumpenbetrieb der den zweiten Wärmetauscher umgehende Bypass geschlossen. Das Kältemittel ist CO2. Die Mittel zum Einstellen der Kältemittelfüllmenge des im Wärmepumpenbetrieb mit Kältemittel durchströmten Bereichs des Kältemittelkreislaufs sind auf den für diesen Betriebsmodus angepassten Hochdruck im Hochdruckbereich des Kältemittelkreislaufs eingestellt. Der Verdichter komprimiert das Kältemittel von ca. 21 bar auf den eingestellten Hochdruck von ca. 100 bar, wobei es eine Temperatur von 130 °C erreicht, also im überkritischen Zustand ist. Das heiße komprimierte Kältemittel gibt daraufhin im ersten Wärmetauscher Wärme an die dortige zu erwärmende Flüssigkeit, wie zum Beispiel Wasser oder ein Wasser-Glykol-Gemisch, ab, wobei das Kältemittel sich bei gleichbleibendem Hochdruck auf ca. 60 °C abkühlt, wie mit dem Bereich A gekennzeichnet ist. Darauf strömt das Kältemittel durch den zweiten Wärmetauscher, in dem es bei weiterhin gleichbleibendem Hockdruck Wärme zum Heizen des Mediums, wie Luft für den Fahrzeuginnenraum, abgibt und sich dabei auf ca. 24 °C abkühlt, wie im Bereich B gezeigt ist. Bei der folgenden in einem Expansionsorgan erfolgenden Entspannung des Kältemittels sinkt bei gleichbleibender Enthalpie von ca. 250 kJ/kg dessen Temperatur auch ca. -18 °C und der Druck fällt auf das Niederdruckniveau von ca. 21 bar ab. Im als Verdampfer betriebenen dritten Wärmetauscher wird bei gleichbleibendem Niederdruck Wärme von einem Medium, wie zum Beispiel aus dem Fahrzeug darauf nach außen strömender Luft, aufgenommen, sodass die Enthalpie des Kältemittels auf ca. 460 kJ/kg ansteigt. Es folgt der erneute Durchlauf des Zyklus mit Kompression im Verdichter.

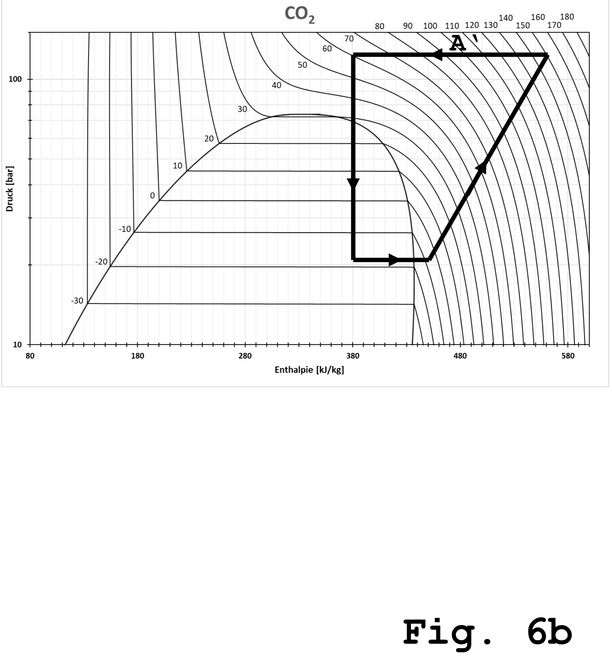

In Fig. 6b ist ein Druck-Enthalpie-Diagramm mit dem Zyklus des Kältemittelkreislaufs eines im zweiten Betriebsmodus laufenden erfindungsgemäßen Verfahrens gezeigt. Mit dem Verfahren wird die in Fig. 6a betriebene Wärmepumpe im zweiten Betriebsmodus betrieben. Dabei ist im Kältemittelkreislauf im Wärmepumpenbetrieb der den zweiten Wärmetauscher umgehende Bypass so weit geöffnet, dass der zweite Wärmetauscher außer Funktion ist. Das Kältemittel ist CO2. Die Mittel zum Einstellen der Kältemittelfüllmenge des im Wärmepumpenbetrieb mit Kältemittel durchströmten Bereichs des Kältemittelkreislaufs sind auf den für diesen Betriebsmodus angepassten Hochdruck im Hochdruckbereich des Kältemittelkreislaufs eingestellt. Der Verdichter komprimiert das Kältemittel von ca. 21 bar auf den eingestellten Hochdruck von ca. 105 bar, wobei es eine Temperatur von ca. 150 °C erreicht, also im überkritischen Zustand ist. In diesem Betriebsmodus ist also der Hochdruck und die erreichte Temperatur deutlich höher als im in Fig. 6a gezeigten Betriebsmodus. Die Kältemittelfüllmenge im mit Kältemittel durchströmten Bereich des Kältemittelkreises ist so hoch eingestellt, dass diese erhöhten Werte durch die Kompression erreicht werden. Es ist bei höherer Kältemittelfüllmenge ein höherer Hochdruck erreichbar.

Das heiße komprimierte Kältemittel gibt daraufhin im ersten Wärmetauscher Wärme an die dortige zu erwärmende Flüssigkeit, wie zum Beispiel Wasser oder ein Wasser-Glykol-Gemisch ab, wobei das Kältemittel sich bei gleichbleibendem Hochdruck auf ca. 60 °C abkühlt, wie mit dem Bereich A' gekennzeichnet ist. Bei der folgenden in einem Expansionsorgan erfolgenden Entspannung des Kältemittels sinkt bei gleichbleibender Enthalpie von ca. 380 kJ/kg dessen Temperatur auch ca. -18 °C und der Druck fällt auf das Niederdruckniveau von ca. 21 bar ab. Im als Verdampfer betriebenen dritten Wärmetauscher wird bei gleichbleibenden Niederdruck Wärme von einem Medium, wie beispielsweise aus dem Fahrzeug darauf nach außen strömender Luft, aufgenommen, sodass die Enthalpie des Kältemittels auf ca. 460 kJ/kg ansteigt. Es folgt der erneute Durchlauf des Zyklus mit Kompression im Verdichter.

In diesem zweiten Betriebsmodus wird nur die Flüssigkeit erwärmt. Der Hochdruck ist so eingestellt, dass im ersten Wärmetauscher vom Kältemittel dafür abgegeben Wärme ausreichend ist, um die Flüssigkeit auf mindestens 60 °C zu erwärmen.

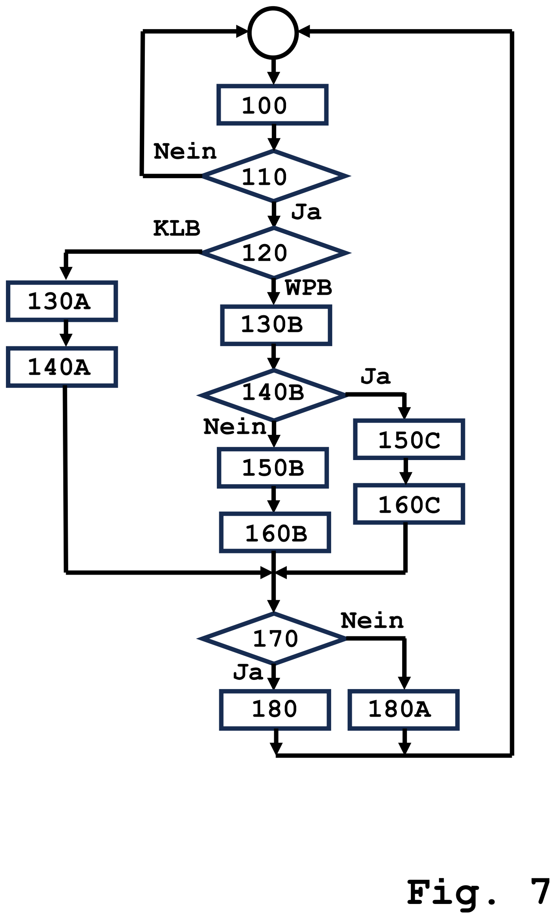

Fig. 7 zeigt als Flussdiagramm ein Ausführungsbeispiel eines erfindungsgemäßen Verfahrens. Mit dem Verfahren wird eine erfindungsgemäße Wärmepumpe, wie beispielsweise irgendeine der in Fig. 2 bis 4 gezeigten, in einem Fahrzeug betrieben. Das Kältemittel ist CO2, welches sich bei Betrieb im Hochdruckbereich des Kältemittelkreislaufs im überkritischen Zustand befindet. Im ersten Schritt 100 werden Messdaten wie insbesondere die Temperaturen der Luft im Fahrzeuginnenraum, der Außenluft, der im ersten Wärmetauscher erwärmbaren Flüssigkeit, wie zum Beispiel Wasser, und der im vierten Wärmetauscher kühlbaren Flüssigkeit, wie beispielsweise ein Wasser-Glykol-Gemisch, von der Regelung empfangen und verarbeitet. Im folgenden Schritt 110 wird entschieden, ob die Wärmepumpe überhaupt betrieben werden soll oder nicht. Falls nicht, also "Nein", beginnt das Verfahren nach einer Dauer von beispielsweise 10 Sekunden erneut. Falls doch, also "Ja", wird im nächsten Schritt 120 entschieden, ob die Wärmepumpe im Klimabetrieb "KLB" zum Kühlen von Luft für einen Fahrzeuginnenraum, oder im Wärmepumpenbetrieb "WPB" betrieben wird. Falls der Klimabetrieb "KLB" gewählt wird, wird die Wärmepumpe im Schritt 130A so geschaltet, dass der zweite Wärmetauscher als Verdampfer also zur Wärmeaufnahme des Kältemittels aus Luft für einen Fahrzeuginnenraum betrieben wird. Im folgenden Schritt 140A wird die Kältemittelfüllmenge im mit Kältemittel durchströmten Bereich des Kältemittelkreislaufs an diesen Betriebsmodus angepasst.

Wenn im Schritt 120 der Wärmepumpenbetrieb "WPB" gewählt wird, erfolgt im nächsten Schritt 130B die Schaltung auf Wärmepumpenbetrieb. Im folgenden Schritt 140B wird die Entscheidung getroffen, ob nur die Flüssigkeit im als Gaskühler/Kondensator laufenden ersten Wärmetauscher erwärmt werden soll und der zweite Wärmetauscher nicht in Funktion sein soll, also "Nein", oder zusätzlich durch den dann als Gaskühler/Kondensator betriebenen zweiten Wärmetauscher auch Luft für einen Fahrzeuginnenraum geheizt werden soll, also "Ja". In beiden Betriebsmodi wird die durch den ersten Wärmetauscher strömende Flüssigkeit wie beispielsweise Wasser auf eine Temperatur von mindestens 60 °C erwärmt.

Wenn das Ergebnis im Schritt 140B "Nein" ist, wird im Schritt 150B das Ventil für den den Gaskühler-/Kondensatorbereich des zweiten Wärmetauschers umgehenden Bypass so weit geöffnet und ein je nach Ausführung der Wärmepumpe gegebenenfalls vorhandenes Ventil für diesen Gaskühler-/Kondensatorbereich geschlossen, sodass das Kältemittel nicht durch diesen Gaskühler-/Kondensatorbereich, sondern durch den Bypass strömt. Im Schritt 160B erfolgt die Einstellung der Kältemittelfüllmenge des mit Kältemittel durchströmten Bereichs des Kältemittelkreislaufs auf den für diesen Betriebsmodus angepassten Hochdruck im Hochdruckbereich des Kältemittelkreislaufs.

Falls hingegen das Ergebnis im Schritt 140B "Ja" ist, wird im Schritt 150C das Ventil für den den Gaskühler-/Kondensatorbereich des zweiten Wärmetauschers umgehenden Bypass geschlossen und gegebenenfalls das Ventil für diesen Gaskühler-/Kondensatorbereich geöffnet, sodass das Kältemittel nicht durch den Bypass, sondern durch diesen Gaskühler-/Kondensatorbereich strömt. Im Schritt 160C erfolgt die Einstellung der Kältemittelfüllmenge des mit Kältemittel durchströmten Bereichs des Kältemittelkreislaufs auf den für diesen Betriebsmodus angepassten Hochdruck im Hochdruckbereich des Kältemittelkreislaufs.

Für jeden der Betriebsmodi ob im Wärmepumpenbetrieb oder im Klimabetrieb wird noch im Schritt 170 bedarfsorientiert entschieden, ob der vierte Wärmetauscher zum Kühlen von Flüssigkeit hinzugeschaltet wird "Ja" oder nicht "Nein". Falls "Ja" wird im Schritt 180 das für ihn vorgesehene Expansionsorgan geöffnet und falls "Nein" wird im Schritt 180A dieses Expansionsorgan geschlossen. Nach einer Dauer von zum Beispiel 10 Sekunden beginnt das Verfahren erneut durchzulaufen.

Ferner ist bei einer geeignet ausgebildeten Ausführung der erfindungsgemäßen Wärmepumpe mit beispielsweise einem stufenlos einstellbaren Mischventil ein Verfahren mit dem weiteren ansteuerbaren Betriebsmodus denkbar, bei dem im Wärmepumpenbetrieb mit von Kältemittel durchströmten als Gaskühler/Kondensator betriebenen ersten Wärmetauscher der Gaskühler-/Kondensatorbereich des zweiten Wärmetauschers von einem in der Größe stufenlos eingestellten Kältemittelteilvolumenstrom zum Heizen von Luft für einen und/oder in einem Fahrzeuginnenraum durchströmt wird, wobei der den Gaskühler-/Kondensatorbereich des zweiten Wärmetauschers umgehende Bypass mit einem stufenlos eingestellten Öffnungsgrad für den übrigen Kältemittelteilvolumenstrom geöffnet ist und die Kältemittelfüllmenge des mit Kältemittel durchströmten Bereichs des Kältemittelkreislaufs auf den für diesen Betriebsmodus angepassten Hochdruck im Hochdruckbereich des Kältemittelkreislaufs eingestellt wird.

## Patentansprüche

1. Wärmepumpe (1) für ein Fahrzeug (63) umfassend einen Kältemittelkreislauf (3) mit wenigstens einem Verdichter (5), einem als Gaskühler/Kondensator betreibbaren als Kältemittel-Flüssigkeits-Wärmetauscher ausgebildeten ersten Wärmetauscher (7), einem als Gaskühler/Kondensator zum Heizen betreibbaren zweiten Wärmetauscher (9), wenigstens einem Expansionsorgan (11, 47, 55) und einem als Verdampfer betreibbaren dritten Wärmetauscher (13), wobei in demjenigen Wärmepumpenbetrieb, bei dem der erste und zweite Wärmetauscher (7, 9) mit Kältemittel durchströmt werden, der erste Wärmetauscher (7) in Kältemittelströmungsrichtung stromaufwärts des zweiten Wärmetauschers (9) angeordnet ist,
**dadurch gekennzeichnet, dass**
- der Kältemittelkreislauf (3) einen den Gaskühler-/Kondensatorbereich (21) des zweiten Wärmetauschers (9) umgehenden schließbaren Bypass (19) umfasst,
- der Kältemittelkreislauf (3) derart ausgebildet ist, dass der Bypass (19) soweit öffenbar ist, dass mit geöffnetem Bypass (19) im Wärmepumpenbetrieb der erste Wärmetauscher (7) ohne den zweiten Wärmetauscher (9) betreibbar ist, und
- die Wärmepumpe (1) zwei Ventile (27, 28; 51, 59) umfassende Mittel (29) zum Einstellen der Kältemittelfüllmenge des im Wärmepumpenbetrieb mit Kältemittel durchströmten Bereichs des Kältemittelkreislaufs (3) umfasst.

2. Wärmepumpe (1) nach Anspruch 1 **dadurch gekennzeichnet, dass**
- der erste Wärmetauscher (7) flüssigkeitsseitig mit Wasser oder einem Wasser-Glykol-Gemisch durchströmbar ausgebildet und angeordnet ist, und/oder
- der zweite Wärmetauscher (9) als Innenwärmetauscher ausgebildet und angeordnet zum direkten oder indirekten Heizen von Luft für einen und/oder in einem Fahrzeuginnenraum (65) betreibbar ist, und der dritte Wärmetauscher (13) als Außenwärmetauscher ausgebildet und angeordnet zur Wärmeaufnahme des Kältemittels direkt oder indirekt von danach nach außen strömender Luft betreibbar ist.

3. Wärmepumpe (1) nach Anspruch 1 oder 2 **dadurch gekennzeichnet, dass** ein Ventil (23) zum Öffnen/Schließen des im Kältemittelkreislauf (3) den Gaskühler-/Kondensatorbereich (21) des zweiten Wärmetauschers (9) umgehenden Bypasses (19) als ein für den Durchlass stufenlos regelbares Ventil ausgebildet ist.

4. Wärmepumpe (1) nach einem der Ansprüche 1 bis 3, **dadurch gekennzeichnet, dass** die Mittel (29) zum Einstellen der Kältemittelfüllmenge des im Wärmepumpenbetrieb mit Kältemittel durchströmten Bereichs des Kältemittelkreislaufs (3) einen Kältemittelsammelbehälter (25) und zum Einstellen dessen Kältemittelfüllmenge die zwei Ventile (27, 28) umfassen.

5. Wärmepumpe (1) nach einem der Ansprüche 1 bis 4, **dadurch gekennzeichnet, dass** sie derart ausgebildet ist, dass sie auch im Klimabetrieb zum Kühlen von Luft für einen und/oder in einem Fahrzeuginnenraum (65) betreibbar ist, wobei der Kältemittelkreislauf (3) zwischen Wärmepumpenbetrieb und Klimabetrieb umschaltbar ausgebildet ist, und der zweite Wärmetauscher (9) umschaltbar auch als Verdampfer und der dritte Wärmetauscher (13) umschaltbar auch als Gaskühler/Kondensator betreibbar sind, wobei sie jeweils für Kältemittel einen Gaskühler-/Kondensatorbereich (21, 41) und einen Verdampferbereich (43, 45) aufweisen.

6. Wärmepumpe (1) nach Anspruch 5 **dadurch gekennzeichnet, dass**
- im Kältemittelkreislauf (3) der schließbare Bypass (19) auch den Gaskühler-/Kondensatorbereich (41) des dritten Wärmetauschers (13) umgehend angeordnet ist, und
- der Kältemittelkreislauf (3) derart ausgebildet ist, dass der Bypass (19) soweit öffenbar ist, dass mit geöffnetem Bypass (19) im Klimabetrieb der erste Wärmetauscher (7) ohne den dritten Wärmetauscher (13) betreibbar ist.

7. Wärmepumpe (1) nach einem der Ansprüche 1 bis 6 **dadurch gekennzeichnet, dass** sie derart ausgebildet ist, dass die Mittel (29) zur Einstellung der Kältemittelfüllmenge des im Wärmepumpenbetrieb mit Kältemittel durchströmten Bereichs des Kältemittelkreislaufs (3) die zwei Ventile (51, 59) für Kältemittelverlagerung in oder aus dem im Kältemittelkreislauf (3) im Wärmepumpenbetrieb sonst ungenutzten Gaskühler-/Kondensatorbereich (41) des dritten Wärmetauschers (13) umfassen.

8. Wärmepumpe (1) nach einem der Ansprüche 1 bis 7 **dadurch gekennzeichnet, dass** sie im Niederdruckbereich des Kältemittelkreislaufs (3) einen als Verdampfer betreibbaren und als Kältemittel-Flüssigkeits-Wärmetauscher ausgebildeten in Parallelschaltung zum Verdampferbereich (45) des dritten Wärmetauschers (13) angeordneten vierten Wärmetauscher (57) umfasst.

9. Wärmepumpe (1) nach einem der Ansprüche 1 bis 8 **dadurch gekennzeichnet, dass**
- der Kältemittelkreislauf (3) einen den ersten Wärmetauscher (7) umgehenden schließbaren weiteren Bypass (31) umfasst, und
- der Kältemittelkreislauf (3) derart ausgebildet ist, dass der weitere Bypass (31) soweit öffenbar ist, dass mit geöffnetem weiteren Bypass (31) im Wärmepumpenbetrieb der zweite Wärmetauscher (9) als Gaskühler/Kondensator ohne den ersten Wärmetauscher (7) betreibbar ist.

10. Wärmepumpe (1) nach einem der Ansprüche 1 bis 9 **dadurch gekennzeichnet, dass** sie eine derart ausgebildete Regelung (35) zum Steuern des Kältemittelkreislaufs (3) umfasst, dass damit das Öffnen/Schließen des den Gaskühler-/Kondensatorbereich (21) des zweiten Wärmetauschers (9) umgehenden Bypasses (19) sowie die Mittel (29) zum Einstellen der Kältemittelfüllmenge des im Wärmepumpenbetrieb mit Kältemittel durchströmten Bereichs des Kältemittelkreislaufs (3) steuerbar sind.

11. Fahrzeug (63), wie insbesondere ein Nutzfahrzeug, **dadurch gekennzeichnet, dass** es eine Wärmepumpe (1) nach einem der Ansprüche 1 bis 10 aufweist.

12. Verfahren zum Betreiben einer Wärmepumpe (1) nach einem der Ansprüche 1 bis 10 in einem Fahrzeug (63) nach Anspruch 11, **dadurch gekennzeichnet,**
**dass** der Kältemittelkreislauf (3) einschließlich der Mittel (29) zum Einstellen der Kältemittelfüllmenge des im Wärmepumpenbetrieb mit Kältemittel durchströmten Bereichs des Kältemittelkreislaufs (3) derart eingestellt werden kann, dass die Wärmepumpe (1) wahlweise in einem der zumindest zwei ansteuerbaren Betriebsmodi
1) des Wärmepumpenbetriebs mit von Kältemittel durchströmten als Gaskühler/Kondensator betriebenen ersten und zweiten Wärmetauscher (7, 9) zum Erwärmen einer durch den ersten Wärmetauscher (7) strömenden Flüssigkeit sowie zum Heizen eines Mediums durch den zweiten Wärmetauscher (9), wobei der den Gaskühler-/Kondensatorbereich (21) des zweiten Wärmetauschers (9) umgehende Bypass (19) geschlossen ist (150C), und die Kältemittelfüllmenge des mit Kältemittel durchströmten Bereichs des Kältemittelkreislaufs (3) auf den für diesen Betriebsmodus angepassten Hochdruck im Hochdruckbereich des Kältemittelkreislaufs (3) eingestellt ist (160C), oder
2) des Wärmepumpenbetriebs mit außer Funktion befindlichem zweiten Wärmetauscher (9) sowie von Kältemittel durchströmten als Gaskühler/Kondensator betriebenen ersten Wärmetauscher (7) zum Erwärmen einer durch den ersten Wärmetauscher (7) strömenden Flüssigkeit, wobei der den Gaskühler-/Kondensatorbereich (21) des zweiten Wärmetauschers (9) umgehende Bypass (19) geöffnet ist (150B), und die Kältemittelfüllmenge des mit Kältemittel durchströmten Bereichs des Kältemittelkreislaufs (3) auf den für diesen Betriebsmodus angepassten Hochdruck im Hochdruckbereich des Kältemittelkreislaufs (3) eingestellt ist (160B), betrieben wird.

13. Verfahren nach Anspruch 12 **dadurch gekennzeichnet, dass** es bei der Wärmepumpe (1) als Kältemittel CO2 im Hochdruckbereich des Kältemittelkreislaufs (3) überkritisch betrieben wird, und, sowohl beim ersten Betriebsmodus als auch beim zweiten Betriebsmodus der Wärmepumpe (1) durch Wärmeabgabe des Kältemittels im ersten Wärmetauscher (7) eine strömende Flüssigkeit auf eine Temperatur von mindestens 60 °C erwärmt wird.

14. Verfahren nach Anspruch 12 oder 13 **dadurch gekennzeichnet, dass** bei einer Wärmepumpe (1) mit den technischen Merkmalen des Anspruchs 3 der Kältemittelkreislauf (3) einschließlich des Öffnungsgrads des den Gaskühler-/Kondensatorbereich (21) des zweiten Wärmetauschers (9) umgehenden Bypasses (19) derart eingestellt werden kann, dass die Wärmepumpe (1) wahlweise in dem weiteren ansteuerbaren Betriebsmodus
3) des Wärmepumpenbetriebs mit von Kältemittel durchströmten als Gaskühler/Kondensator betriebenen ersten Wärmetauscher (7) zum Erwärmen einer durch den ersten Wärmetauscher (7) strömenden Flüssigkeit und von einem in der Größe stufenlos eingestellten Kältemittelteilvolumenstrom durchströmten Gaskühler-/Kondensatorbereich (21) des zweiten Wärmetauschers (9) zum Heizen eines Mediums, wobei der den Gaskühler-/Kondensatorbereich (21) des zweiten Wärmetauschers (9) umgehende Bypass (19) mit einem stufenlos eingestellten Öffnungsgrad für den übrigen Kältemittelteilvolumenstrom geöffnet ist und die Kältemittelfüllmenge des mit Kältemittel durchströmten Bereichs des Kältemittelkreislaufs (3) auf den für diesen Betriebsmodus angepassten Hochdruck im Hochdruckbereich des Kältemittelkreislaufs (3) eingestellt ist, betrieben wird.

15. Verfahren nach einem der Ansprüche 12 bis 14 **dadurch gekennzeichnet, dass** bei einer Wärmepumpe (1) mit den technischen Merkmalen des Anspruchs 5 der Kältemittelkreislauf (3) derart eingestellt werden kann, dass die Wärmepumpe (1) wahlweise in dem weiteren ansteuerbaren Betriebsmodus
4) des Klimabetriebs (130A) mit direkter oder indirekter Wärmeaufnahme des Kältemittels aus Luft für einen und/oder in einem Fahrzeuginnenraum (65), betrieben wird.

16. Verfahren nach einem der Ansprüche 12 bis 15 **dadurch gekennzeichnet, dass** die Einstellung (140A, 160B, 160C) der Kältemittelfüllmenge des mit Kältemittel durchströmten Bereichs des Kältemittelkreislaufs (3) auf den für den jeweiligen Betriebsmodus angepassten Hochdruck im Hochdruckbereich des Kältemittelkreislaufs (3) durch entsprechendes Steuern der beiden Ventile (27, 28) für Kältemittelverlagerung in oder aus einem Kältemittelsammelbehälter (25) erfolgt.

17. Verfahren nach einem der Ansprüche 12 bis 15 **dadurch gekennzeichnet, dass** die Einstellung (160B, 160C) der Kältemittelfüllmenge des mit Kältemittel durchströmten Bereichs des Kältemittelkreislaufs (3) auf den für den jeweiligen Betriebsmodus des Wärmepumpenbetriebs angepassten Hochdruck im Hochdruckbereich des Kältemittelkreislaufs (3) durch entsprechendes Steuern des/der Ventil(s)/e (51, 59) für Kältemittelverlagerung in oder aus einem im Kältemittelkreislauf (3) im Wärmepumpenbetrieb sonst ungenutzten Gaskühler-/Kondensatorbereich (41) des dritten Wärmetauschers (13) erfolgt.

18. Verfahren nach einem der Ansprüche 12 bis 17 **dadurch gekennzeichnet, dass** bei einer Wärmepumpe (1) mit den technischen Merkmalen des Anspruchs 9 der Kältemittelkreislauf (3) so eingestellt werden kann, dass die Wärmepumpe (1) wahlweise in dem weiteren ansteuerbaren Betriebsmodus
5) des Wärmepumpenbetriebs mit nicht von Kältemittel durchströmten ersten Wärmetauscher (7) und von Kältemittel durchströmten als Gaskühler/Kondensator zum Heizen betriebenen zweiten Wärmetauscher (9), wobei der den ersten Wärmetauscher (7) umgehende weitere Bypass (31) geöffnet ist und die Kältemittelfüllmenge des mit Kältemittel durchströmten Bereichs des Kältemittelkreislaufs (3) auf
den für diesen Betriebsmodus angepassten Hochdruck im Hochdruckbereich des Kältemittelkreislaufs (3) eingestellt ist,
betrieben wird.

19. Verfahren nach einem der Ansprüche 12 bis 18 **dadurch gekennzeichnet, dass** bei einer Wärmepumpe (1) mit den technischen Merkmalen des Anspruchs 8 der vierten Wärmetauscher (57) bei jedem eingestellten Betriebsmodus als Verdampfer zur Kühlung einer durch ihn strömenden Flüssigkeit zu- und abschaltbar betrieben wird (180).
